(19) Europäisches Patentamt
European Patent Office
Office européen des brevets

(11) **EP 1 863 023 A2**

(12) **EUROPEAN PATENT APPLICATION**

(43) Date of publication:
    **05.12.2007 Bulletin 2007/49**

(51) Int Cl.:
    ***G11B 7/125*** (2006.01)

(21) Application number: **07109206.8**

(22) Date of filing: **30.05.2007**

(84) Designated Contracting States:
    **AT BE BG CH CY CZ DE DK EE ES FI FR GB GR
    HU IE IS IT LI LT LU LV MC MT NL PL PT RO SE
    SI SK TR**
    Designated Extension States:
    **AL BA HR MK YU**

(30) Priority: **31.05.2006 JP 2006152758**

(71) Applicant: **Kabushiki Kaisha Toshiba**
    **Minato-ku, Tokyo 105-8001 (JP)**

(72) Inventors:
    • **Usui, Takashi**
      **Toshiba Corporation**
      **Intellectual Property Division**
      **Tokyo 105-8001 (JP)**
    • **Kuroda, Kazuto**
      **Toshiba Corporation**
      **Intellectual Property Division**
      **Tokyo 105-8001 (JP)**
    • **Ueno, Masashi**
      **Toshiba Corporation**
      **Intellectual Property Division**
      **Tokyo 105-8001 (JP)**

(74) Representative: **Henkel, Feiler & Hänzel**
    **Patentanwälte**
    **Maximiliansplatz 21**
    **80333 München (DE)**

(54) **Optical disc apparatus and recording power control method**

(57)    In a data write operation, the average value of the emission power detected by a front monitor (FM) is obtained via a low-pass filter (14) and a sample hold circuit (15). In the write operation, erase power controlled by an erase APC (19) is obtained via a sample hold circuit (12). While an LD (79) is emitting light with the erase power, an erase current is determined from the output voltage of the erase APC (19). On the basis of the average power, the erase power, the erase current, and a waveform of the recording pulse, a current-to-emission-power characteristic of the LD (79) is estimated (007). Furthermore, on the basis of the current-to-emission-power characteristic, the peak power in the write operation of the LD (79) are controlled (008 to 010).

FIG.3

**Description**

This invention relates to the technique for recording information onto a recordable optical disc, such as CD-R, CD-RW, DVD-R, DVD-RW, DVD-RAM, HDDVD-R, HDDVD-RAM, or HDDVD-RW, and more particularly to control of recording power.

In recent years, a high recording density optical disc apparatus, such as a DVD recorder, has been popularized. With improvements in the recording density of the optical disc, the optical disc has been required to have a high reliability of its recoding quality.

For example, in a rewritable optical disc, groove and/or land tracks are formed on the disc surface, recording layers are formed at the tracks, and a beam spot of laser light is caused to follow a track, thereby forming or erasing recording marks. It is known that the driving-current-to-emission-power characteristic of a laser diode used for an optical disc fluctuates according to temperature change or temporal change. To improve the recording performance, it is important to control the emission power so that the power may be constant.

In a conventional power control method, first, the value of recording power (peak power) in the mark part, the value of recording power (erase power) in the space part, and the value of bottom power in a multi-pulse are held. Then, on the basis of the held values and the ratio of the erase power to preset peak power and bottom power, erase power is calculated. The recording pulse is controlled so that the actual intensity levels of the peak power, bottom power, and erase power may coincide with respective target values (Jpn. Pat. Appln. KOKAI Publication No. 2000-30276).

Generally, control to keep the emission power of a laser diode (LD) constant (Auto Power Control, hereinafter referred to as APC) is performed on the three levels, peak power, erase power, and bottom power, in a multi-pulse method of recording a single recording mark with a plurality of peak power pulses by use of a peak (bottom) hold circuit and a sample hold circuit through analog or digital feedback control. The conventional method, however, has the following problems:

(1) A fast-response/high-accuracy peak hold circuit or sample hold circuit is required.
(2) When pulses (boost pulses) higher than those in the other parts are used only as the pulses corresponding to the beginning and end of a mark part, it is unclear which one of a plurality of peak levels is held by the peak hold circuit.
(3) As an optical monitor element, such as a front monitor, to measure a peak level, a broadband one is needed.

These problems arise prominently as the recording density and speed of the optical disc increase.

It is, accordingly, an object of the invention to provide control whereby an LD is caused to always emit light with required power without using a high-priced fast response/high accuracy peak hold circuit or broadband monitor, even if a fluctuation in the characteristic of the LD occurs due to temperature changes.

To solve the problems in the conventional method, there is provided a method of estimating the current-to-emission-power characteristic (hereinafter, referred to as the I-L characteristic) of an LD using the average power and erase power in recording that can be measured with a narrowband peak hold circuit without using a broadband peak hold circuit and determining a current setting value to obtain an arbitrary power level.

Since the I-L characteristic fluctuates due to temperature changes or time degradation, it is necessary to determine a driving current value that causes the optimum power to be generated constantly. At this time, if the latest I-L characteristic is known, not only can a constant emission level be kept, but also a current value to obtain a new target level can be known immediately, even when the target level is changed in learning or testing the write characteristic. Therefore, it is possible to control the emission power level instantaneously without going through transitional conditions in feedback control of conventional emission power.

According to an embodiment of the invention, it is possible to provide control whereby an LD is caused to always emit light with required power without using a high-priced fast response/high accuracy peak hold circuit or broadband monitor, even if the characteristic of the LD fluctuates due to temperature changes.

The invention can be more fully understood from the following detailed description when taken in conjunction with the accompanying drawings, in which:

FIG. 1 is a block diagram showing an example of the configuration of an optical disc apparatus to which the invention is applied;
FIG. 2 is a diagram to help explain an example of laser emission power in a data read operation and a data write operation;
FIG. 3 is a block diagram showing the configuration of an embodiment of the laser control circuit;
FIG. 4 shows the relationship between emission power used in LD emission power control and LD driving currents;
FIG. 5 is a diagram to help explain average power;
FIG. 6 is a diagram to help explain the duty ratio of a single-pulse recording waveform;
FIG. 7 is a diagram to help explain the duty ratio of a multi-pulse recording waveform;

FIG. 8 is a graph obtained when the current to emission power of a laser diode is nonlinear;

FIG. 9 is a graph to help explain an embodiment of a method of compensating for the nonlinear characteristic of the current to emission power in the invention;

FIG. 10 is a flowchart to help explain an LD driving current value setting process in laser emission power control; and

FIG. 11 is a flowchart to help explain a second embodiment of the LD driving current value setting process in laser emission power control.

Hereinafter, referring to the accompanying drawings, embodiments of the present invention will be explained.

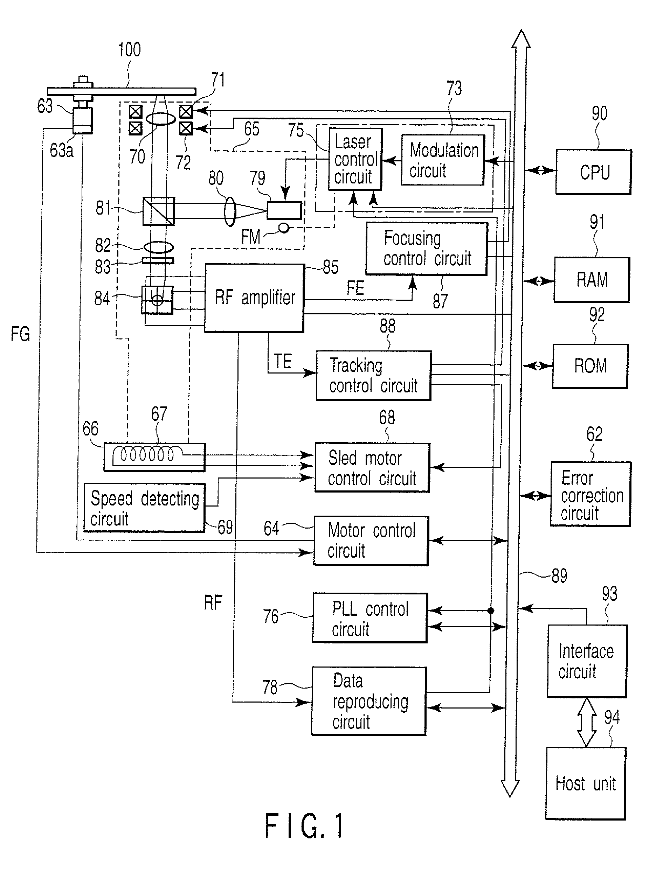

FIG. 1 is a block diagram showing an example of the configuration of an optical disc apparatus to which the invention is applied.

The optical disc apparatus records and reproduces information onto and from an information storage medium, or an optical disc 100, such as a DVD (Digital Versatile Disc). In the optical disc 100, grooves are cut concentrically or spirally. The concave parts are called lands and the convex parts are called grooves. One round of a groove or a land is called a track. Intensity-modulated laser light is applied along the track (or only a groove or both a groove and a land) to form recording marks, thereby recording user data. The data is reproduced by applying read-power laser light weaker than in recording to the track and detecting changes in the reflected light intensity caused by recording marks on the track. The recorded data is erased by applying erase-power laser light higher than the read power to the track to crystallize the recording layer.

The optical disc 100 is rotated by a spindle motor 63. A rotation detector 63a provided on the spindle motor 63 supplies FG pulses. When the spindle motor 63 makes one revolution, for example, five FG pulses are generated. From the FG pulses, the rotation angle and rotation number of the spindle motor 63 can be determined.

Information is recorded onto and reproduced from the optical disc 100 by an optical pickup 65. The optical pickup 65 is coupled with a sled motor 66 via a gear. The sled motor 66 is controlled by a sled motor control circuit 68.

A speed detecting circuit 69 is connected to the sled motor control circuit 68. A speed signal of the optical pickup 65 detected by the speed detecting circuit 69 is sent to the sled motor control circuit 68. A permanent magnet (not shown) is provided at the fixed part of the sled motor 66. A driving coil 67 is excited by the sled motor control circuit 68, thereby moving the optical pickup 65 over the radius of the optical disc 100.

An objective lens 70 supported by a wire or leaf spring (not shown) is provided to the optical pickup 65. The objective lens 70 can be moved by the driving of a driving coil 72 in the focusing direction (or in the direction of optical axis of the lens). It also can be moved by the driving of a driving coil 71 in the tracking direction (or in the direction perpendicular to the optical axis of the lens).

A modulation circuit 73 subjects user data supplied from a host unit 94 via an interface circuit 93 to, for example, 8-14 modulation (EFM) in recording information, thereby providing EFM data. When information is recorded (or when a mark is formed), a laser control circuit 75 supplies a write signal to a laser diode (or laser light-emitting element) 79 on the basis of the EFM data supplied from the modulation circuit 73. When information is read, the laser control circuit 75 supplies a read signal smaller than the write signal to the laser diode 79. The configuration of the laser control circuit 75 will be described in detail later.

A front monitor FM composed of a photodiode detects the light quantity of laser light, or emission power, generated by the laser diode 79 and supplies the detected current to the laser control circuit 75. On the basis of the detected current from the front monitor FM, the laser control circuit 75 controls the laser diode 79 so as to cause the diode 79 to emit light with reproducing laser power, recording laser power, or erasing laser power set by a CPU 90.

The laser diode 79 generates laser light according to the signal supplied from the laser control circuit 75. The laser light emitted from the laser diode 79 passes through a collimator lens 80, a half prism 81, and the objective lens 70 and is shed on the optical disc 100. The reflected light from the optical disc 100 passes through the objective lens 70, half prism 81, a condenser lens 82, and a cylindrical lens 83 and is directed to an photodetector 84.

The photodetector 84 is composed of, for example, quadrant photo-detection cells. The detected signals of these photo-detection cells are output to an RF amplifier 85. The RF amplifier 85 processes the signals from the photo-detection cells and produces a focus error signal FE indicating a deviation from the just focus, a tracking error signal TE indicating the difference between the beam spot center of laser light and the track center, and an RF signal as the sum total signal of photo-detection cell signals.

The focus error signal FE is supplied to a focusing control circuit 87. The focusing control circuit 87 generates a focus driving signal according to a focus error signal FE. The focus driving signal is supplied to the driving coil 71 in the focusing direction. This achieves focus servo whereby laser light is caused to always focus on the recording film of the optical disc 100.

The tracking error signal TE is supplied to a tracking control circuit 88. The tracking control circuit 88 generates a track driving signal according to the tracking error signal TE. The track driving signal output from the tracking control circuit 88 is supplied to the driving coil 72 in the tracking direction. This achieves tracking servo whereby laser light is caused to always trace a track formed on the optical disc 100.

Use of the focus servo and tracking servo causes changes in the reflected light from the pits made in the track of the optical disc 100 according to the recording information to be reflected in the sum total signal RF of the output signals of the individual photo-detection cells of the photodetector 84. The signal is supplied to a data reproducing circuit 78. The data reproducing circuit 78 reproduces the recorded data on the basis of the reproducing clock signal from a PLL circuit 76.

When the objective lens 70 is controlled by the tracking control circuit 88, the sled motor control circuit 68 controls the sled motor 66 or PUH 65 in such a manner that the objective lens 70 comes close to a specific position in the PUH 65.

The motor control circuit 64, sled motor control circuit 68, laser control circuit 73, PLL circuit 76, data reproducing circuit 78, focusing control circuit 87, tracking control circuit 88, error correction circuit 62, and others are controlled by the CPU 90 via the bus 89. According to an operation command supplied from a host unit 94 via an interface circuit 93, the CPU 90 controls the recording and reproducing apparatus in a comprehensive manner. The CPU 90 uses a RAM 91 as a working area and performs a specific operation according to a control program including programs of the invention recorded in a ROM 92.

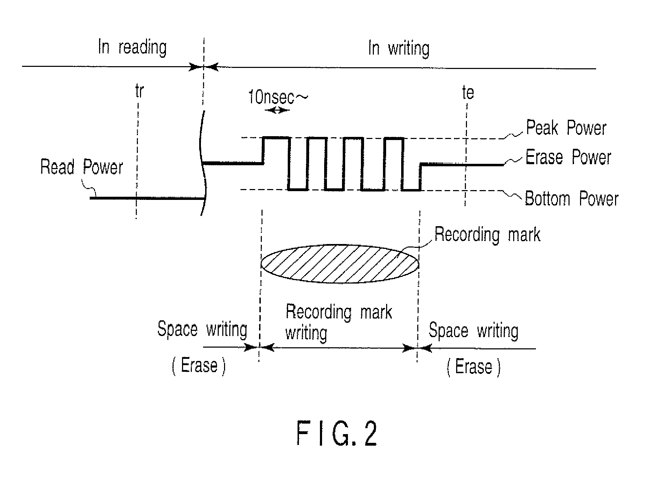

FIG. 2 shows an example of laser emission power in a data read operation and a data write operation.

In a data write operation, the laser diode 79 repeats peak power and bottom power as shown in FIG. 2, thereby forming a recording mark on a track. The laser diode 79 generates erase power, thereby crystallizing the recording layer of the disc 100 to form a space (or to erase the mark).

In a data read operation, the laser diode 79 generates read power continuously. The read power is much lower than the erase power and therefore the phase state of the recording layer is not changed by the read power.

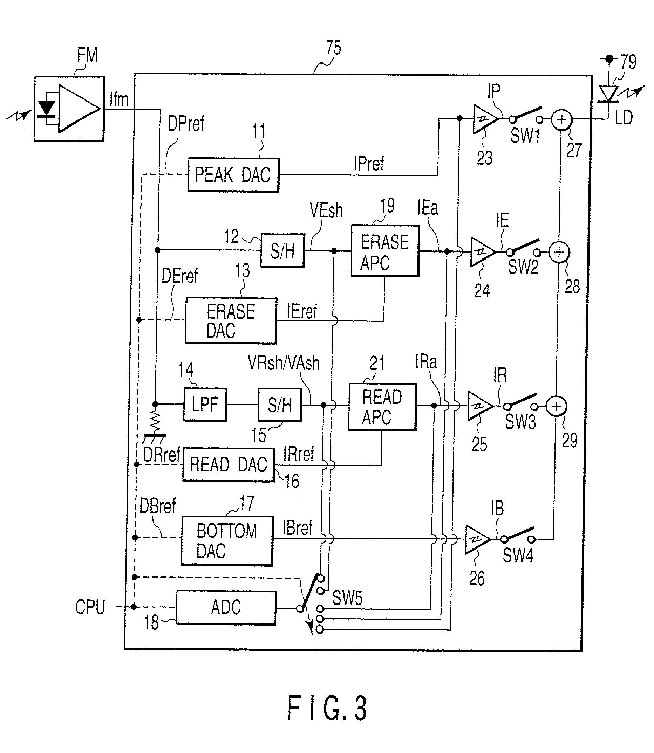

FIG. 3 is a block diagram showing the configuration of an embodiment of the laser control circuit 75.

A peak DAC 11 DA-converts peak reference data DPref set by the CPU 90 and outputs a peak reference current IPref. The peak reference current IPref corresponds to the target peak power of the LD 79. A current amplifier 23 amplifies the peak reference current IPref and outputs a peak current IP. At this time, the input voltage of the current amplifier 23 corresponds to the peak current value and is input via a switch SW5 to an ADC 18, which AD-converts the voltage. The resulting signal is read by the CPU 90. A switch SW1 goes on at the peak of the recording signal waveform in a write operation as shown in FIG. 2. As a result, the peak current IP amplified by the current amplifier 23 flows through the LD via an adder 27.

An erase DAC 13 DA-converts erase reference data DEref set by the CPU 90 and outputs an erase reference current IEref. The erase reference current IEref shows target erase power. A sample hold circuit 12 samples the erase power with such timing as time te in generating the erase power in FIG. 2 and outputs an erase sample voltage VEsh to an erase auto-power controller (APC) 19. The erase sample voltage VEsh is input via the switch SM5 to the ADC 18, which AD-converts the voltage. The resulting signal is read by the CPU 90. The erase sample voltage VEsh shows emission power in an erase operation.

An erase APC 19 converts the erase reference current IEref into an erase reference voltage VEref and compares the voltage with the erase sample voltage VEsh. The erase APC 19 outputs an erase current IEa APC-controlled so that VEref and VEsh may equal each other. For example, if the erase sample voltage VEsh is lower than the erase reference voltage VEref, the output erase current IEa is increased. Conversely, if the erase sample voltage VEsh is higher than the erase reference voltage VEref, the output erase current IEa is decreased.

The current amplifier 24 amplifies the erase current IEa and outputs an erase current IE. The input voltage of the current amplifier 24 shows the magnitude of the erase current IEa. Moreover, the input voltage of the current amplifier 24 is input via the switch SW5 to the ADC 18, which AD-converts the voltage. The resulting voltage is read by the CPU 90. The switch SW2 goes on during the erase period of the recoding signal waveform in a write operation as shown in FIG. 2. As a result, the erase current IP amplified by the current amplifier 24 flows through the LD via an adder 28 and the adder 27.

A read DAC 16 DA-converts read reference data DRref set by the CPU 90 and outputs a read reference current IRref. The read reference current IRref shows target read power. A low-pass filter 14 filters the voltage generated by the output current Ifm of the front monitor FM. A sample hold circuit 15 samples the output value of an LFP 14 with such timing as time tr in generating the read power in FIG. 2 and outputs a read sample voltage VRsh to a read APC 21. The read sample voltage VRsh shows emission power in a read operation.

A read APC 21 converts the read reference current IRref into a read reference voltage VRref and compares the voltage with the read sample voltage VRsh. The read APC 21 outputs a read current IRa APC-controlled so that the read reference voltage VRref and the read sample voltage VRsh may equal each other. For example, if the read sample voltage VRsh is lower than the read reference voltage VRref, the read current IRa is increased. Conversely, if the read sample voltage VRsh is higher than the read reference voltage VRref, the read current IRa is decreased.

The current amplifier 25 amplifies the read current IRa and outputs a read current IR. The switch SW3 goes on in a read operation as shown in FIG. 2. As a result, the read current IR amplified by the current amplifier 25 flows through the LD via an adder 29 and the adders 28 and 27.

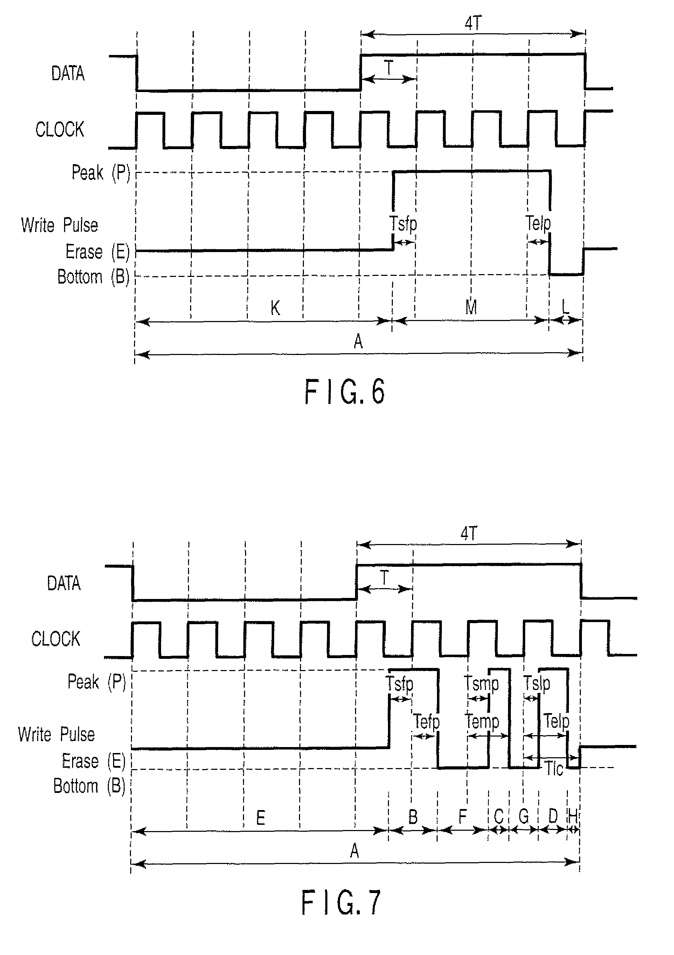

The low-pass filter 14 and sample hold circuit 15 output an average value VAsh corresponding to average power $P_{AVG}$ in a write operation as shown in FIG. 5. The average value VAsh is input via the switch SW5 to the ADC 18, which AD-converts the average value. The resulting signal is read by the CPU 90. The switch SW3 remains off in a write operation.

A bottom DAC 17 DA-converts bottom reference data DBref set by the CPU 90 and outputs a bottom reference current IBref. The bottom reference current IBref corresponds to target bottom power. A current amplifier 26 amplifies the bottom reference current IBref and outputs a bottom current IB. A switch SW4 goes on at the bottom level of the recording signal waveform in a write operation as shown in FIG. 2. As a result, the bottom current IB amplified by the current amplifier 26 flows through the LD via the adders 29, 28, 27.

Next, a concrete method of estimating the I-L characteristic will be described.

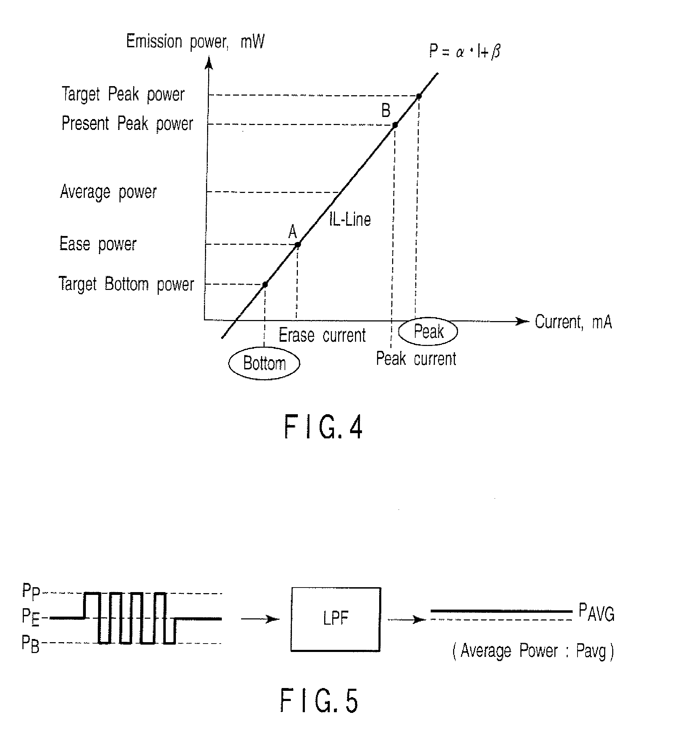

FIG. 4 shows the relationship between emission power used in LD emission power control and LD driving currents. The quality of a recording mark (or reproduced signal quality) formed in the recording layer of an optical disc depends greatly on the accuracy of the peak power of the LD. Therefore, it is necessary to control the peak power accurately so as to coincide with a target value.

Previously, while the magnitude of the peak current for generating the peak power was being changed, the emission power of the LD was measured with a light-receiving element, such as a front monitor, and a peak current for generating target power was determined. At this time, when emission power was measured, the output current or output voltage of the light-receiving element in generating peak power was held at the peak hold circuit. The held value was AD-converted. The resulting signal was read by the CPU. As the data recorded onto the optical disc got denser and the rotation number of the disc in recording increased, a faster-response, higher-accuracy peak hold circuit was required. Use of such a peak hold circuit results in an increase in the manufacturing cost of the optical disc apparatus. The same holds true for bottom power.

To overcome this problem, the current-to-emission-power characteristic of the LD is estimated in an embodiment of the invention and, on the basis of the current-to-emission-power characteristic, for example, the optimum peak current (or peak reference data DPref) is determined.

In FIG. 4, for example, if a straight line passing through the peak power (point B in FIG. 4) in peak-current driving and the erase power (point A in FIG. 4) in erase-current driving is known, the current-to-emission-power characteristic of the LD can be estimated. In the embodiment of the invention, using the average power measured value and erase power measured value in a write operation as parameters, the current-to-emission-power characteristic of the LD is estimated. As seen from FIG. 2 and FIG. 5 described later, the measurement of the average power and erase power needs neither a fast-response sample hold circuit nor a front monitor.

First, the erase APC 19 performs feedback control of the power sampled in a space interval by the sample hold circuit 12 so that the sample power may be equal to the target erase power, thereby controlling the erase power. In this way, the current value of the LD emitting light with the target erase power is acquired via an AD converter 18.

The peak power can be determined almost uniquely from the I-L characteristic found from the average emission power, erase power, and pulse waveform. If the average power is close to the erase power, the waveform of the multi-pulse, average power, or erase power is changed temporarily and the I-L characteristic is estimated. FIG. 5 shows a conceptual diagram of average power. The high-frequency components are removed from the output of the front monitor FM by the low-pass filter 14 and the resulting signal is sampled by the sample hold circuit 15. The average power is obtained via the AD converter 18 from the sampled signal.

Hereinafter, concrete calculation examples will be described.

If power is P and current is I, the I-L characteristic of the LD is expressed as equation (1):

$$P = \alpha \cdot I + \beta \qquad (1)$$

Using the average power measured value $P_{AVG}$, erase power measured value $P_E$, the duty ratios $d_P$, $d_E$, and $d_B$ of the peak pulse, erase pulse, and bottom pulse ($d_P + d_E + d_B = 1$) respectively, and the respective current values Ip, $I_E$, and $I_B$, the coefficients $\alpha$ and $\beta$ can be expressed by equation (2) and equation (3):

$$\alpha = \frac{P_{AVG} - P_E}{d_P \cdot I_P - (1 - d_E) \cdot I_E + d_B \cdot I_B} \qquad (2)$$

$$\beta = P_E - \frac{P_{AVG} - P_E}{d_P \cdot I_P - (1 - d_E) \cdot I_E + d_B \cdot I_B} \cdot I_E \qquad (3)$$

Here, the duty ratios dp, $d_E$, and $d_B$ (dp + $d_E$ + $d_B$ = 1) are constants determined by waveforms. FIG. 6 shows a waveform of a single pulse. FIG. 7 shows a waveform of a multi-pulse.

In the case of NT space/NT mark consecutive pattern as shown in FIG. 6, if the data period is A, the erase width in one data period is K, the peak pulse width is M, and the bottom width is L (where N in NT is, for example, an integer in the range from 2 to 13 and T is a reference clock period), the duty ratios can be expressed by the following equations:

$$d_P = \frac{M}{A} \qquad (4)$$

$$d_E = \frac{K}{A} \qquad (5)$$

$$d_B = \frac{L}{A} \qquad (6)$$

When these are expressed using Tsfp and Telp in a write strategy, the following equations are obtained. The write strategy is a laser modulation method or a recording waveform in recording a mark onto an optical disc. It is defined for each length of a recording mark, such as 3T or 4T, in written standards or the like. For example, Tsfp is the time from the rising of a write pulse signal (Write Pulse) until the first rising of a reference clock signal (CLOCK) when a data signal (DATA) is at the high (H) level.

$$d_P = \left( \frac{Tsfp + Telp}{40} + N - 2 \right) / 2N \qquad (7)$$

$$d_E = \left( (N+1) - \frac{Tsfp}{40} + \left( 1 - \frac{Tlc}{40} \right) \right) / 2N \qquad (8)$$

$$d_B = \left( \frac{Tlc - Telp}{40} \right) / 2N \qquad (9)$$

In the case of a 2T multi-pulse NT space/NT mark consecutive pattern as shown in FIG. 7, if the data period is A, the peak pulse widths in one data period are B, C, and D, the erase width is E, and the bottom width is H, the duty ratios are expressed by the following equations:

$$d_P = \frac{B + C + D}{A} \qquad (10)$$

$$d_E = \frac{E}{A} \tag{11}$$

$$d_B = \frac{H}{A} \tag{12}$$

When these are expressed using Tsfp, Telp, Tefp, Tsmp, Temp, Tslp, and Tlc in the write strategy, the following equations are obtained:

When N = 2,

$$d_P = \left( \frac{Tsfp + Telp}{40} + N - 2 \right) / 2N \tag{13}$$

$$d_E = \left( (N+1) - \frac{Tsfp}{40} + \left( 1 - \frac{Tlc}{40} \right) \right) / 2N \tag{14}$$

$$d_B = \left( \frac{Tlc - Telp}{40} \right) / 2N \tag{15}$$

When N ≥ 3,

$$d_P = \left( \frac{Tsfp + Tefp}{40} + \frac{Temp - Tsmp}{40} \cdot (N-3) + \frac{Telp - Tslp}{40} \right) / 2N \tag{16}$$

$$d_E = \left( (N+1) - \frac{Tsfp}{40} + \left( 1 - \frac{Tlc}{40} \right) \right) / 2N \tag{17}$$

$$d_B(N) = \left( \left( 1 - \frac{Tefp}{40} \right) + \left( 1 - \frac{Temp - Tsmp}{40} \right) \cdot (N-3) + \frac{Tslp + Tlc - Telp}{40} \right) / 2N \tag{18}$$

In actual data, suppose each mark length and each space length appear evenly. If the shortest mark length is Tmin [T] and the longest mark length is Tmax [T], let

$$d_P{}' = \frac{1}{T_{max} - T_{min} + 1} \sum_{N=T_{min}}^{T_{max}} d_P \tag{19}$$

$$d_E{}' = \frac{1}{T_{max} - T_{min} + 1} \sum_{N=T_{min}}^{T_{max}} d_E \tag{20}$$

$$d_B{}' = \frac{1}{T_{max} - T_{min} + 1} \sum_{N=T_{min}}^{T_{max}} d_B \tag{21}$$

Then, $\alpha$ and $\beta$ are calculated by substituting dp', $d_E$', and $d_B$' into dp, $d_E$, and $d_B$ in equation (2) and equation (3). If the frequency of appearance of each mark length and each space length in user data to be written is known, weighting can be done in calculating an average duty ratio.

Peak current $I_P$ and bottom current $I_B$ corresponding to the target peak power $P_P$ and bottom power $P_B$ are found using equation (1) as follows:

$$I_P = \frac{P_P - \beta}{\alpha} \tag{22}$$

$$I_B = \frac{P_B - \beta}{\alpha} \tag{23}$$

Repeating the above estimating process at a constant frequency makes it possible to always obtain the latest I-L characteristic and control the power level even in the middle of recording user data onto the optical disc.

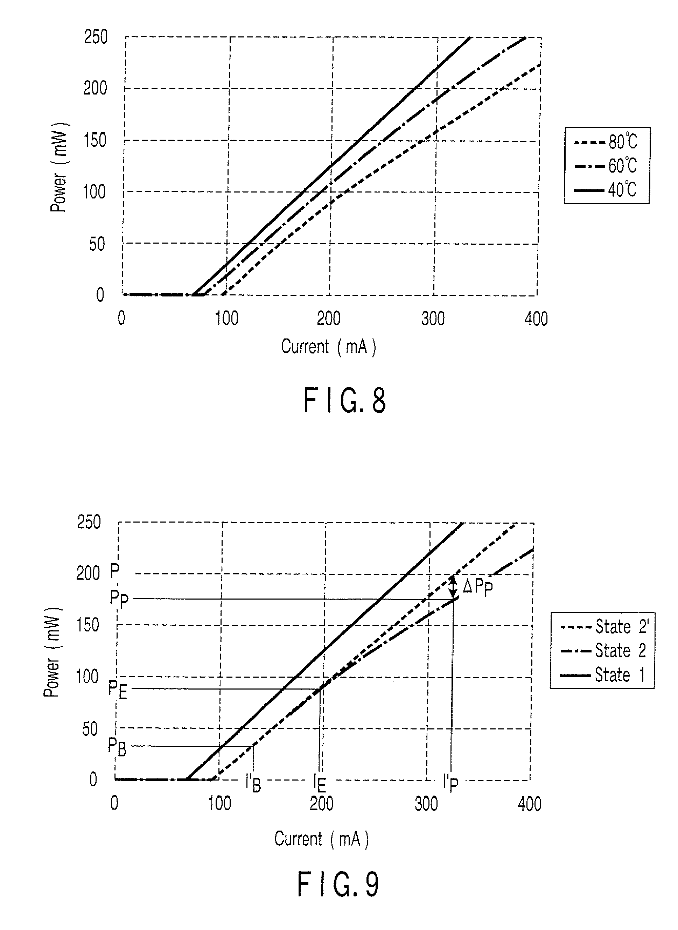

It is known that the I-L characteristic of the LD is nonlinear at high temperature and high output as shown in FIG. 8. At such high temperature and high output, the nonlinearity of the I-L characteristic can be compensated for by a method described below.

FIG. 9 is a diagram to help explain a method of compensating for the current-to-emission-power nonlinear characteristic according to an embodiment of the invention. State 1 shows the I-L characteristic in the preceding sampling, state 2 shows the I-L characteristic in the present sampling, and state 2' shows the I-L characteristic with no deviation from a straight line.

If the coefficients used in calculating the peak current and bottom current in the preceding sampling interval are $\alpha$' and $\beta$' and the coefficients in the present sampling intervals are $\alpha$ and $\beta$, the I-L characteristic in a straight line area is expressed by the following equations:

$$P = \alpha' \times I + \beta' \tag{24}$$

$$P = \alpha \times I + \beta \tag{25}$$

Since $\alpha$ and $\beta$ represent the present state, the following equation holds:

$$P_E = \alpha \times I_E + \beta \tag{26}$$

Here, since $\alpha$ hardly changes even if the temperature changes, $\alpha$ can be approximated as follows:

$$\alpha \approx \alpha' \tag{27}$$

Thus, $\beta$ is found using the following equation:

$$\beta = P_E - \alpha \times I_E \tag{28}$$

Moreover, the amount of deviation $\Delta P_P$ from the straight line in the peak power is determined.
If the peak current is $I_P'$ and bottom current is $I_B'$ in the preceding sampling interval and $\Delta P_P$ is taken into consideration, the peak power Pp and bottom power $P_B$ are expressed by the following equations:

$$P_P = \alpha \times I_P' + \beta - \Delta P_p \tag{29}$$

$$P_B = \alpha \times I_B' + \beta \tag{30}$$

Using the duty ratios dp, $d_E$, and $d_B$, the average power $P_{AVG}$ obtained from an AD converter is expressed by the following equation:

$$P_{AVG} = P_P d_P + P_E d_E + P_B d_B \tag{31}$$

Substituting equations (29) and (30) into equation (31) gives:

$$\Delta P_P = \frac{(\alpha \times I_P' + \beta) \times d_P + P_E \times d_E + (\alpha \times I_B' + \beta) \times d_B - P_{AVG}}{d_P} \tag{32}$$

In this way, $\Delta$Pp from the straight line is determined.
Finally, the peak current $I_P$ and bottom current $I_B$ used in the present sampling interval are calculated.
If the peak power and bottom power necessary for recording are Ppref and $P_B$ref respectively, the peak current Ip and bottom current $I_B$ can be determined as follows:

$$I_P = \frac{P_P ref - \beta + \Delta P_P}{\alpha} \tag{33}$$

$$I_B = \frac{P_B ref - \beta}{\alpha} \tag{34}$$

Even if the I-L characteristic is nonlinear, use of the above method makes it possible to compensate for the nonlinearity.

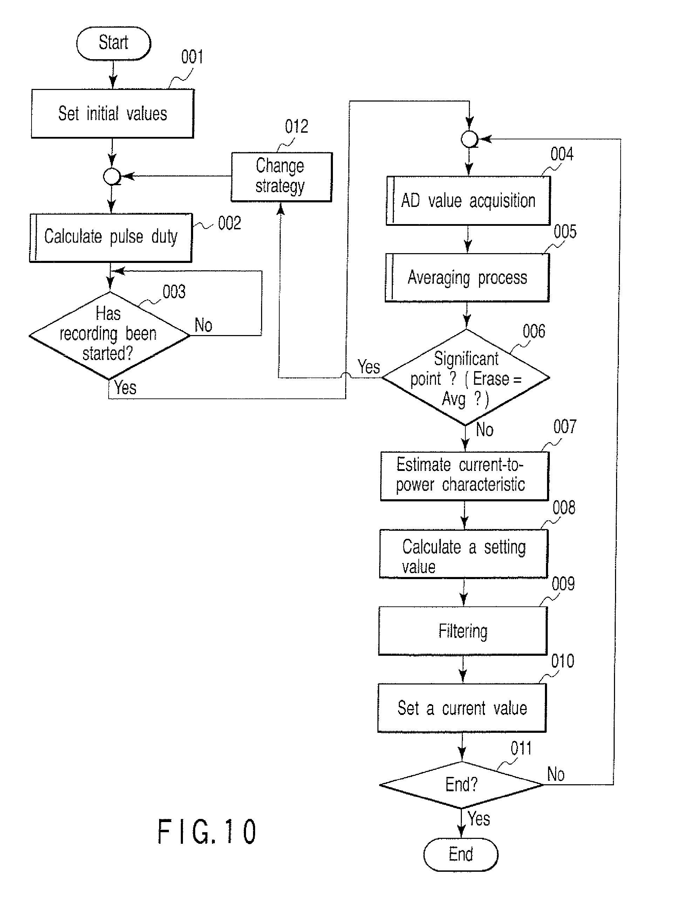

Next, a recording power control operation according to an embodiment of the invention will be explained in detail. FIG. 10 is a flowchart to help explain an LD driving current value setting process in laser emission power control. Each block is executed under the control of the CPU 90.

First, the CPU 90 sets predetermined initial power (in FIG. 3, the individual initial values of the peak reference data DPref, erase reference data DEref, and bottom reference data DBref) or the power in the preceding start-up in the DAC 11, DAC 13, and DAC 17 (001)

From the present write strategy, the pulse duty ratio of each of the bottom power, erase power, and peak power is calculated using equation (13) to equation (21) (002). A recording start trigger (instruction) is waited for (003). If recording is started, the erase power (in FIG. 3, the output voltage VEsh of the sample hold circuit 12) and erase current (the output terminal voltage of the erase APC 19) are taken in as digital signals via the AD converter 18 (004). Here, a smoothing process, such as taking a moving average, may be performed. The moving average is obtained by measuring the erase power and erase current repeatedly through a loop process and striking an average of the latest erase power and erase current. At this time, the erase APC 19 performs control so that the erase power may be kept at the target value.

The output voltage (VAsh in FIG. 3) of the sample hold circuit 15 in recording is acquired as the average power $P_{AVG}$ from the ADC 18 (005). The average power $P_{AVG}$ is compared with the erase power obtained in block 004. If the difference between the average power and the erase power is equal or less than a specific value (or if the average power is close to the erase power) (Yes in 006), the waveform is changed temporarily in the direction of time or in the direction of amplitude, that is, the strategy is changed (012). Here, the specific value of the difference is several % (e.g., 2%) of the difference between the peak power and bottom power. Here, a case where the difference between the average power and the erase power is equal to or lees than the specific value is actually rare.

From the changed strategy, the pulse duty ratio of each of the bottom power, erase power, and peak power is calculated again using equation (13) to equation (21) (002). Then, it is determined whether the erase power is almost equal to the average power (004 to 006). The above processes are repeated until the difference between the erase power and the average power has exceeded the specific value.

The erase power, erase current, and average power obtained in block 004 and block 005, the peak current and bottom current set in block 001, and each pulse duty ratio calculated in block 002 are substituted into equation (2) and equation (3), thereby estimating the current-to-output characteristic of the laser diode ($\alpha$ and $\beta$). As the peak current and bottom current, IPref and IBref in FIG. 3 may be obtained via ADC 18. Since these values are practically the same as those set in block 001, the values set in block 001 are used.

From the estimated current-to-output characteristic, the peak current value and bottom current value for causing the LD to emit light with a desired peak power and bottom power are calculated using equation (22) and equation (23) (007). Then, the calculated current values are set in the peak DAC 11 and bottom DAC 17 as current command values (in FIG. 3, the peak reference data DPref and bottom reference data DBref) (009). Thereafter, control returns to block 004, where a loop process is carried out periodically, which enables the emission power to be controlled.

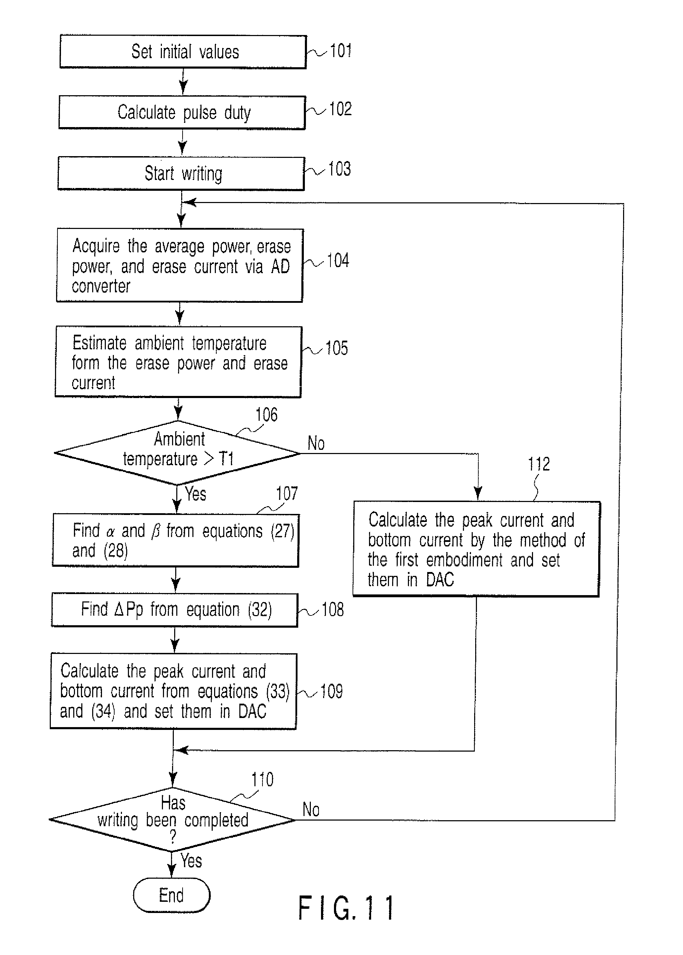

Next, a recording power control operation according to a second embodiment of the invention will be explained. FIG. 11 is a flowchart to help explain an LD driving current value setting process in laser emission power control according to the second embodiment. Each block is executed under the control of the CPU 90.

For example, if the I-L characteristic of a red LD is nonlinear at high temperature and high output as described above, the linearity can be compensated for by performing control as shown in FIG. 11. The processes from the initial setting (101) to the acquisition of the average power (104) are the same as the above processes (001 to 004).

In block 105, an ambient temperature is estimated from the erase power setting value (in FIG. 3, the erase reference value DEref) and erase current (in FIG. 3, the current IEa). When light has been emitted with high emission power and the ambient temperature has become high, the luminous efficiency of the LD drops. Therefore, to emit light even at high temperature with the same power as at normal temperature, the current value has to be increased. The erase APC 19 performs this control. On the basis of an increment in the current at this time, the ambient temperature is estimated. The estimation of the ambient temperature in block 105 is for determining the timing of starting the compensation in the second embodiment and therefore it is not necessary to always perform control including compensation (107 to 109).

In block 106, it is determined whether the ambient temperature is higher than T1°C (in the case of an LD for DVD, about 50°C). If the ambient temperature is higher than T1°C (in the case of Yes), the I-L characteristic ($\alpha$, $\beta$) in the straight line area is calculated using equations (27) and (28) (107). In block 108, the amount of deviation $\Delta$Pp from the straight line at the peak power is found using equation (32). Finally, in block 109, the peak current and bottom current used in the present sampling interval are calculated using equations (33) and (34) and are set in the peak DAC 11 and bottom DAC 17, respectively.

In block 106, if the ambient temperature is equal to or lower than T1°C (in the case of No), the I-L characteristic ($\alpha$, $\beta$) is calculated by the method in block 007 to block 010 in the above-described flowchart of FIG. 10. Then, the resulting values are set in the peak DAC 11 and bottom DAC 17, respectively.

As described above, according to the embodiments of the invention, it is possible to provide control whereby an LD always emits light with required power without using a high-priced fast-response/high-accuracy peak hold circuit or broadband monitor even if the characteristic of the LD fluctuates due to temperature changes.

**Claims**

1. An optical disc apparatus **characterized by** comprising:

    a laser light-emitting element;
    a detecting unit (FM) which detects the emission power of the laser light-emitting element;
    an average power measuring unit (14, 15) which measures an average value of the emission power detected by the detecting unit in a write operation in which the laser light-emitting element is driven with recording pulses and marks are formed on a track on an optical disc;
    an erase power measuring unit (12, 18) which, in the write operation, measures erase power controlled so as to coincide with a target value by feedback control;
    an erase current measuring unit (19, 18) which, while the laser light-emitting element is emitting light with the erase power, measures an erase current driving the laser light-emitting element;
    an estimating unit (80, 007) which estimates a current-to-emission-power characteristic of the laser light-emitting element on the basis of the average power, the erase power, the erase current, and a waveform of the recording pulse; and
    control unit (90, 008 to 010) which controls the peak power of the laser light-emitting element in the write operation on the basis of the current-to-emission-power characteristic.

2. The optical disc apparatus according to claim 1, **characterized in that** the estimating unit estimates the current-to-emission-power characteristic to be a straight line and further estimates the amount of deviation of actually generated peak power from target peak power in the write operation calculated from the current-to-emission-power characteristic (108), and
    the control units correct the actually generated peak power on the basis of the amount of deviation (107).

3. The optical disc apparatus according to claim 1 or 2, **characterized by** further comprising a unit (012) which, when the difference between the average power and the erase power is equal to or less than a specific value, changes a write strategy of the recording pulse waveform.

4. The optical disc apparatus according to any one of claim 1 to claim 3, **characterized in that** the control unit controls the bottom power of the laser light-emitting element in the write operation on the basis of the current-to-emission-power characteristic (17, 18).

5. A recording power control method **characterized by** comprising the steps of:

    detecting the emission power of a laser light-emitting element (FM), and measuring an average value of the detected emission power (005, 15) in a write operation in which the laser light-emitting element is driven with recording pulses and marks are formed on a track on an optical disc;
    in the write operation, measuring erase power controlled so as to coincide with a target value by feedback control (004, 12);
    while the laser light-emitting element is emitting light with the erase power, measuring an erase current driving the laser light-emitting element (004, 12);
    estimating a current-to-emission-power characteristic of the laser light-emitting element on the basis of the average power, the erase power, the erase current, and a waveform of the recording pulse (007); and
    controlling the peak power of the laser light-emitting element in the write operation on the basis of the current-to-emission-power characteristic.

6. The recording power control method according to claim 5, **characterized in that** the step of estimating the current-to-emission-power characteristic includes a step of estimating the current-to-emission-power characteristic to be a straight line and further estimating the amount of deviation $\Delta P_P$ of actually generated peak power from target peak power in the write operation calculated from the current-to-emission-power characteristic (108), and
    the step of controlling the peak power includes a step of correcting the actually generated peak power on the basis of the amount of deviation $\Delta P_P$ (109).

7. The recording power control method according to claim 5, **characterized by** further comprising a step of, when the difference between the average power and the erase power is equal to or less than a specific value, changing a write strategy of the recording pulse waveform.

8. The recording power control method according to claim 6, **characterized by** further comprising a step of, when the difference between the average power and the erase power is equal to or less than a specific value, changing a write strategy of the recording pulse waveform.

9. The recording power control method according to claim 5, **characterized in that** the step of controlling the peak power includes a step of controlling the bottom power of the laser light-emitting element in the write operation on the basis of the current-to-emission-power characteristic.

10. The recording power control method according to claim 6, **characterized in that** the step of controlling the peak power includes a step of controlling the bottom power of the laser light-emitting element in the write operation on the basis of the current-to-emission-power characteristic.

F I G. 1

FIG. 2

F I G. 3

Emission power, mW

$P = \alpha \cdot I + \beta$

Target Peak power

Present Peak power

B

Average power

Ease power

A

IL-Line

Target Bottom power

Erase current

Peak

Bottom

Peak current

Current, mA

# F I G. 4

$P_P$

$P_E$

$P_B$

LPF

$P_{AVG}$

( Average Power : Pavg )

# F I G. 5

FIG.6

FIG.7

F I G. 8

F I G. 9

Start

001
Set initial values

012
Change
strategy

Calculate pulse duty 002

003
Has
recording been
started?

No

Yes

004
AD value acquisition

005
Averaging process

006
Significant
point ? ( Erase =
Avg ? )

Yes

No

007
Estimate current-to-
power characteristic

008
Calculate a setting
value

009
Filtering

010
Set a current value

011
End?

No

Yes

End

FIG. 10

Set initial values ~101

Calculate pulse duty ~102

Start writing ~103

Acquire the average power, erase power, and erase current via AD converter ~104

Estimate ambient temperature form the erase power and erase current ~105

106
Ambient temperature > T1 — No

Yes ↓ 107
Find $\alpha$ and $\beta$ from equations (27) and (28)

Find $\Delta Pp$ from equation (32) ~108

Calculate the peak current and bottom current from equations (33) and (34) and set them in DAC ~109

112
Calculate the peak current and bottom current by the method of the first embodiment and set them in DAC

110
Has writing been completed ? — No

Yes ↓
End

F I G. 11

**EP 1 863 023 A2**

**Patent documents cited in the description**

- JP 2000030276 A